# EUROPEAN PATENT SPECIFICATION

(11) **EP 0 609 573 B1**
(45) Date of publication and mention of the grant of the patent: **21.05.1997**
(21) Application number: 93200283.5
(22) Date of filing: 04.02.1993
(51) Int. Cl.: B27C 9/04, B23Q 37/00

(54) **Combined multifunctional machine-tool for craftwork of wood and metal**
Kombinierte Werkzeugmaschine für mehrere Bearbeitungsarten von Holz und Metall
Combiné d'usinage multifonctions pour travailler le bois et le métal

(43) Date of publication of application: 10.08.1994
(73) Proprietor: Carabalona, Enrico, I-20043 Arcore, Milano (IT)
(72) Inventor: Carabalona, Enrico, I-20043 Arcore, Milano (IT)
(74) Representative: Riccardi, Sergio

(56) References cited:
- DE-A- 1 653 701
- DE-C- 367 788
- DE-C- 814 661
- DE-U- 8 900 045
- US-A- 1 834 684
- US-A- 2 071 201
- US-A- 2 656 861
- US-A- 4 497 353

## Description

This invention concerns a combined multifunctional machine tool, with the characteristic of comprising a large number of supports and work benches, equipped with electric tools and manual equipment.

It is known that in the carpentry or mechanical workshop, all the various processes are carried out by means of single machine tools, or by combined machines, which allow different processes to be carried out while using a single motor drive. In the last few years also multifunctional machines have been realized, with two or more motor drives and multiple work benches.

It is also known that the combined machines were initially realized only for carpentry, not taking into consideration the need of using a machine of that type also in the workshop where mechanical work is carried out.

The objective of these machines is that of solving problems of work organization, reducing the need for large working areas and the cost of individual equipment, ergonomically combining the operational mechanical parts in a single multifunctional unit.

Amongst the most popular combined machines with two functions one can mention the single-cylinder planer and double-cylinder planer, the cropper and bench disk saw, the planer and slotting machine, and the like; amongst those with three functions the combination of single-cylinder planer, double-cylinder planer and slotting machine is known. Also known are those with five functions comprising single-cylinder planer, double cylinder planer, slotting machine, shaper and disk saw, and also those with seven or eight functions which have in addition to the functions just listed also a carriage for squaring up and tenoning and a device for making the disk of the circular saw inclinable.

As one may notice, some carpentry tools are not included amongst those cited, inasmuch as until now they have not been included in the combined machines in question. Amongst these we can list the wood lathe, polishing belt, band saw, bench vice and so on.

Combined machine tools generally comprise an enbloc metal frame, made of structural steel or casting, in which a motor with speed reducer and various tools or equipment are mounted, the latter arranged under the work bench or at the sides of the base, and which can be set up, operatively, in their corresponding work area, as required.

A careful analysis of the machines currently on the market leads to some considerations reported hereinbelow.

The first is the poor utilisation of the empty spaces on the inside of the frame and laterally with respect to said frame.

The second is the poor ergonomics of the tools equipped with guiding carriages which considerably protrude from the opposite sides of the supporting frame, with evident discomfort for the operator and the need for considerable space around the machine itself.

Thirdly it is pointed out that for machines which have single independent work benches, the reduced size of the support bench reduces the interferences, but also the quality of the work, the level of safety and the possibility of carrying out work of a certain size.

One notes also that the high speed of the planer exploited by the slotting machine also constitutes a limit on the use of the relative carriage which cannot be utilised to advantage for other possible functions such as cleaning, polishing, sharpening and so on.

In DE-C-814661, representing the closest state of the art, a combined multifunctional machine tool for working on pieces of wood and metal, comprising a metal frame and a main work bench to contain, support and make operative a plurality of tools, together with their operating parts and their components for service, adjustment, stopping, transmission and resetting, a first part of said plurality of tools allowing craftwork of wood and including a disk saw, a single-cylinder and a double-cylinder planer, a milling and tenoning shaper, a slotting machine, a band saw for large thickness, a wood lathe, a polishing belt; a second part of said plurality of tools allowing for the working of metal pieces and including a pillar drill and a bench grinder is described. In DE-C-814661, the invention consists of the positioning in a star configuration of a plurality of connected and motorized tools around a central column, with said tools being able to function simultaneously. While the above-mentioned invention is quite valid and functional, it needs considerable dimensions. In addition, one notes the absence of some tools fundamental for the working of these materials (e.g., a squaring carriage).

In US-A-1834684, a different machine for the working a wood - like materials which integrates a plurality of electrical equipment in one and the same casing is described.

The object of this invention is to eliminate all the aforementioned difficulties, to overcome the limits met and to definitively create a new device able, thanks to its original combination of elements, to satisfy economical and industrial interests, thus distinctly improving the pre-existing technology.

These and other objects are achieved by a combined multifunctional machine tool according to the claims, which provides a supporting structure able to receive and make operative a double series of tools, both manual and electrical, with the relative working parts and service components such as driving, adjustment, transmission, locking, and resetting mechanisms able to ensure all the indispensable and auxiliary processes relative to craftwork of wood, and alternatively all the processes relative to craftwork of metals in general and of iron in particular can be effected with results of a professional standard, providing a combined dual-purpose machine for two distinct technical sectors, giving two machines in one.

With reference to the working of wood, by utilising a combined machine of this type, one can carry out operations of straight and inclined cutting, single and double-cylinder planing, milling and tenoning, drilling, slotting, squaring, turning, polishing, cutting of large thicknesses and unspecified manual work at the horizontal vice.

With the same machine tool, in the technical sector of metals, one can carry out operations of slow cutting with coolant, drilling, grinding, plastic work, and manual adjustment at the bench vice.

The machine considered here also due to the fact that its structure, which is suitably interacting, also due to the fact that it allows a band saw and a slotting carriage to be connected on the same side of a squaring carriage, achieves the objective of completely exploiting spaces and volumes thus perfecting the relationship between space, cost, ergonomics, and quality of results on the one hand and the limitation of use and interference on the other.

Again thanks to the structure which allows insertion and operation of a high and complete number of tools, thanks to the use of specific devices such as: a large working bench which may serve also as an assembly bench, a head vice with slots and dogs, a multiple speed spindle at the outlet of the lathe, a versatile instrument is obtained to which technical modifications and adjustments can be made by the operator.

These and other particular technical characteristics will be better emphasized in the following detailed description, given purely as an example and not limiting the scope of the invention and with the aid of the appended sheets of illustrative drawings in which:
Figure 1 shows a schematic perspective view of the support frame of the machine, as a whole, without the work benches and the accessories;
Figure 2 shows a general perspective view of the arrangement to allow the working of the wood;
Figure 3 shows a general perspective view of the arrangement to allow the working of metals;
Figure 4 shows, as an example, the various components for carrying out slotting of wood, arranged on one of the sides of the frame;
Figure 5 shows the operational arrangement of the slotting carriage, equipped with a column with arm vice, set up for carrying out the relative process;
Figure 6 shows a detailed perspective view of the arrangement for the lathing of wood, arranged under the main work bench;
Figure 7 shows a detailed perspective view of the working arrangement for cutting with a band saw or a disk saw, for milling and tenoning with a shaper and squaring up carriage, for planing with a planer, on wood;
Figure 8 shows a detailed perspective view of the main work bench set up for cutting with a disk saw, for polishing with the belt, for milling and tenoning with the shaper and the squaring carriage, for planing with the planer, highlighting the relative service guides;
Figure 9 shows a schematic perspective view of some equipment for working metals, arranged in the resting position on one of the sides of the frame;
Figure 10 shows a schematic perspective view of the machine in question, pointing out the lateral arrangement for the working of wood and metals, the folding half-bench to which the metal cutting equipment is fixed, and finally various service devices;
Figure 11 shows a detailed perspective view of the set up as bench grinder for metals, arranged under the main work bench; and
Figure 12 shows a detailed perspective view of the work bench set up for metal cutting using a disk cropper, drilling with a pillar drill, plastic working with an anvil, finishing of mechanical work at the bench vice.

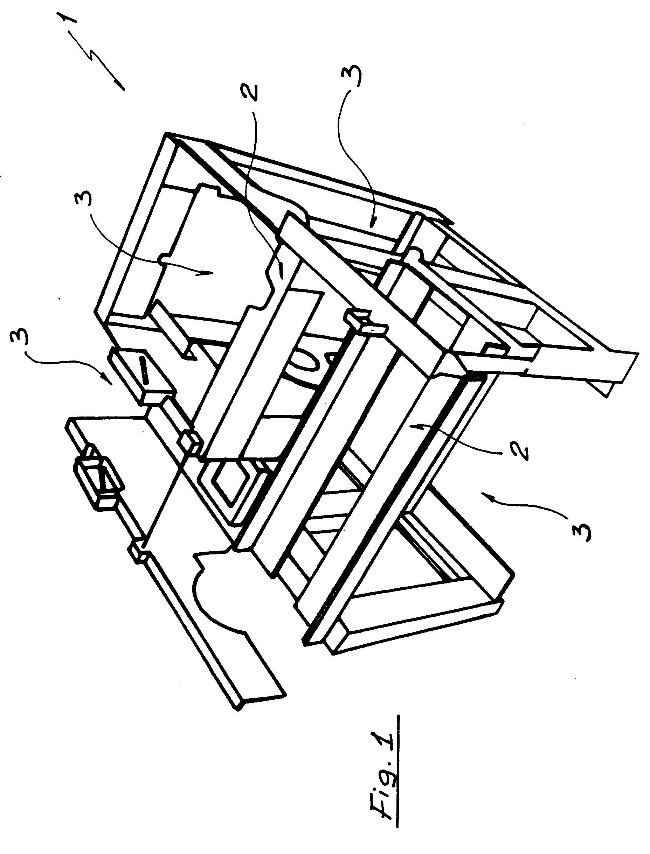

With reference to figure 1, the machine described comprises a metal frame 1, provided with various work benches 2 and various recessed compartments 3, suitable for containing and supporting the foldable or sliding work benches provided for working wood and metals.

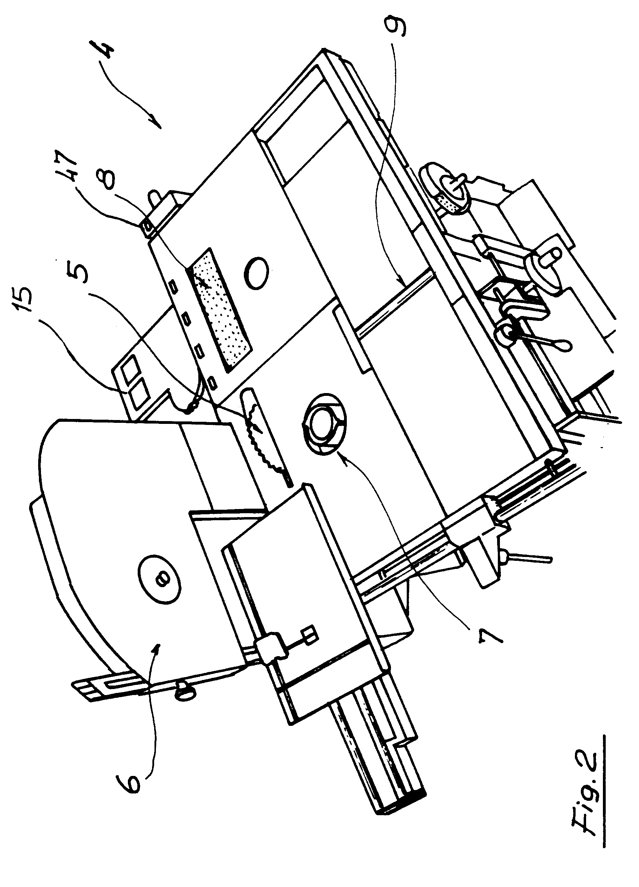

With reference to figure 2, for working wood, machine 4 in question has a disk saw 5 for carrying out straight or inclined cuts, a vertical band saw 6 for cutting large thicknesses and small joint work, a horizontal miller 7 for milling and tenoning with the aid of the relevant squaring carriage 15, a polishing belt 8 for finishing work, a single-cylinder planer and a double-cylinder planer 9 for planing work and a head vice 47 with slots and dogs for less specific work.

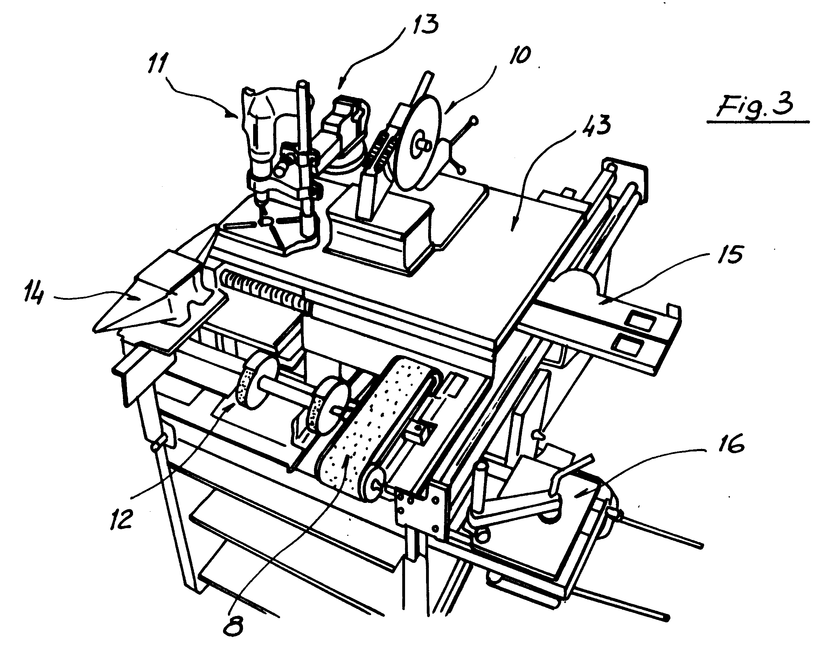

With reference to figure 3, for working metal, the machine is equipped with a disk cropper 10 for straight and angled cuts, a pillar drill 11 for drilling, a bench grinder 12 for grinding and sharpening, a bench vice 13 for mechanical working and finishing and an anvil 14 for riveting and heading metals. At the top and at the side, carriage 15 for squaring and tenoning, belt 8 for polishing, and carriage 16 for slotting are visible, for the working of wood.

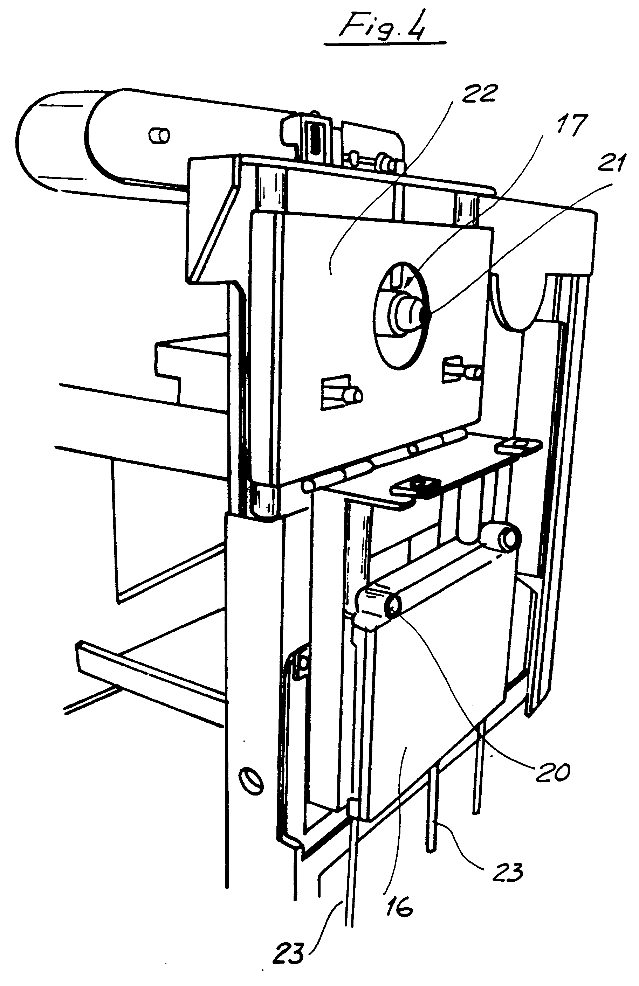

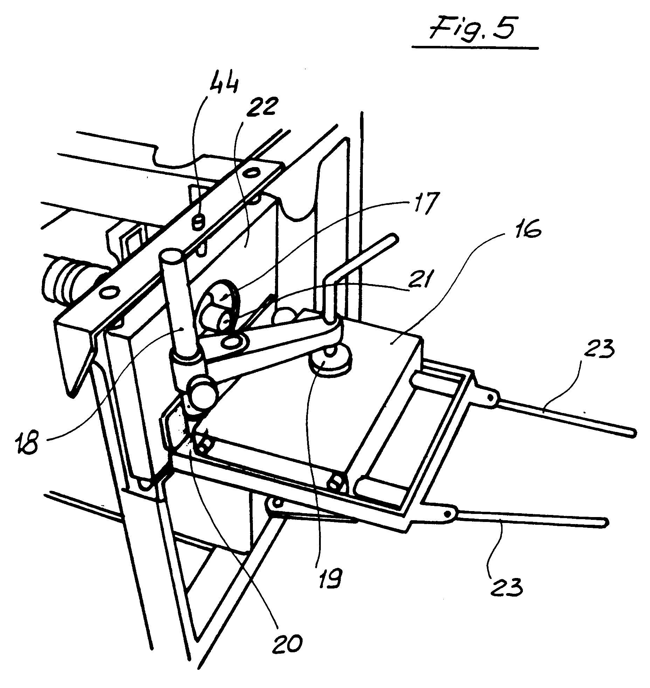

In figures 4 and 5 how the slotter is activated by folding back the lateral carriage 16 and setting up the vertical column 18 with vice 19 in the relevant cylindrical seat 20 is highlighted. The tool is fixed to the motorized head 21 which protrudes from the vertical plane 22, while the movement of the workpiece occurs by means of the displacement of carriage 16 by means of two levers 23 pivoted to the said carriage and the supporting structure, and adjustable in height by means of the worm screw 44.

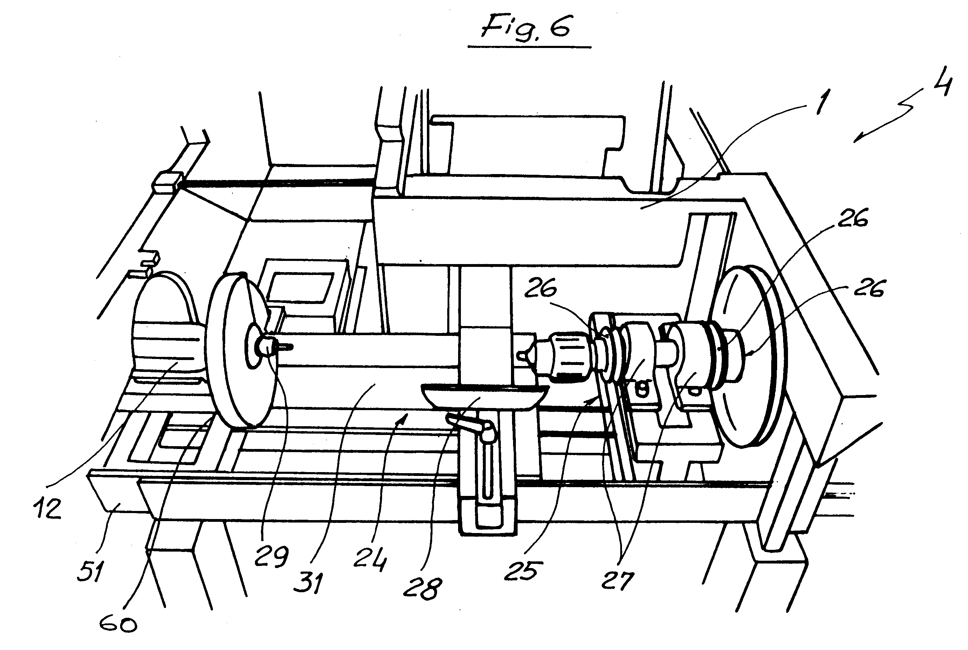

With reference to figure 6, the wood lathe 24, positioned under the main work bench 32 which is divided into two foldable half-benches, comprises a lateral support 25 with belt pulleys 26 and ball bearings 27 for the rotation of the workpiece, fixed onto internal horizontal or auxiliary bench 31, a support 28 for the manual tool for turning and a tailstock 29 which is machined on the head of bench grinder 12 fixed to the extractable sliding saddle 51 along proper tracks 60, rotatable 180° with respect to said internal horizontal bench 31.

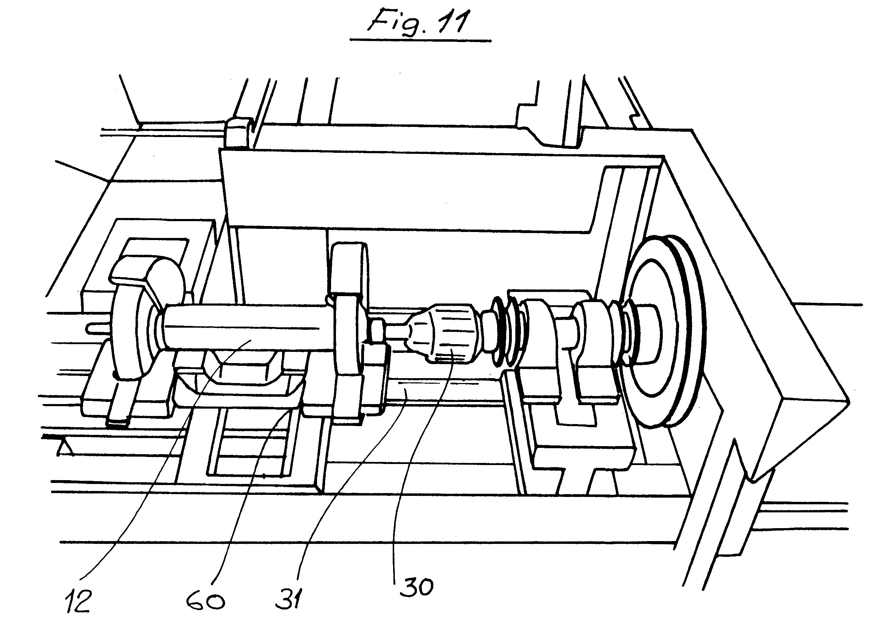

The bench grinder, in fact, as shown in figure 11, is activated and motorized by means of the said workpiece carrying spindle 30 of wood lathe 24, rotating the vice carrying saddle 51 by 180 degrees, which is slidable with adjustable movement on the internal horizontal bench 31.

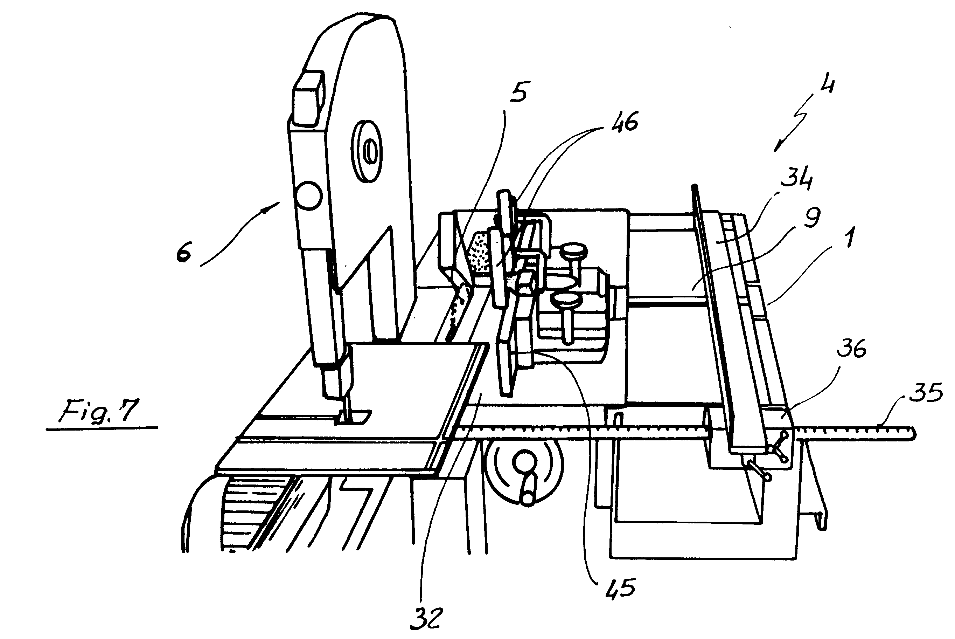

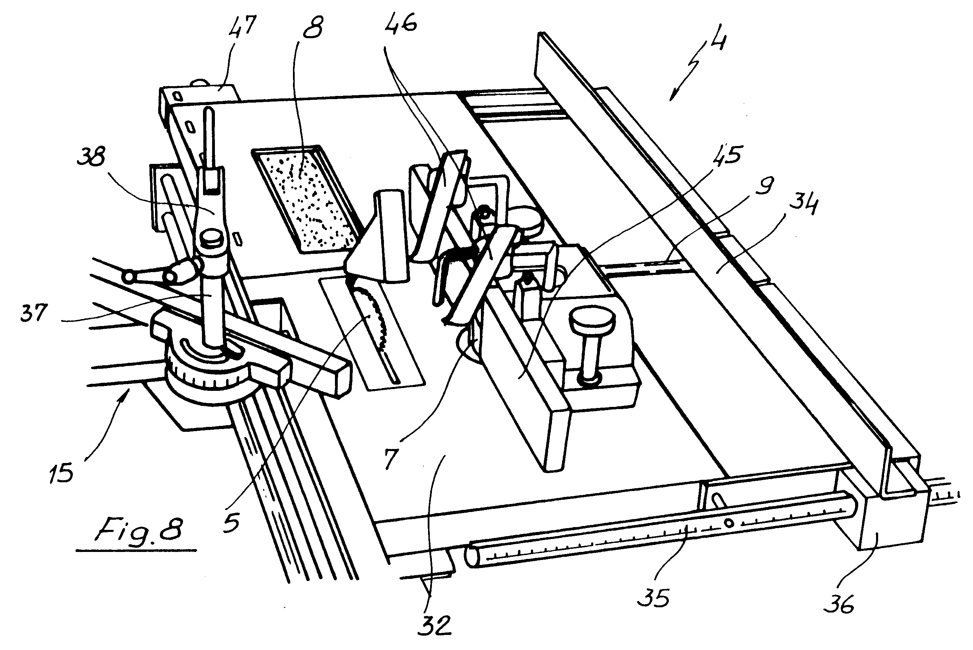

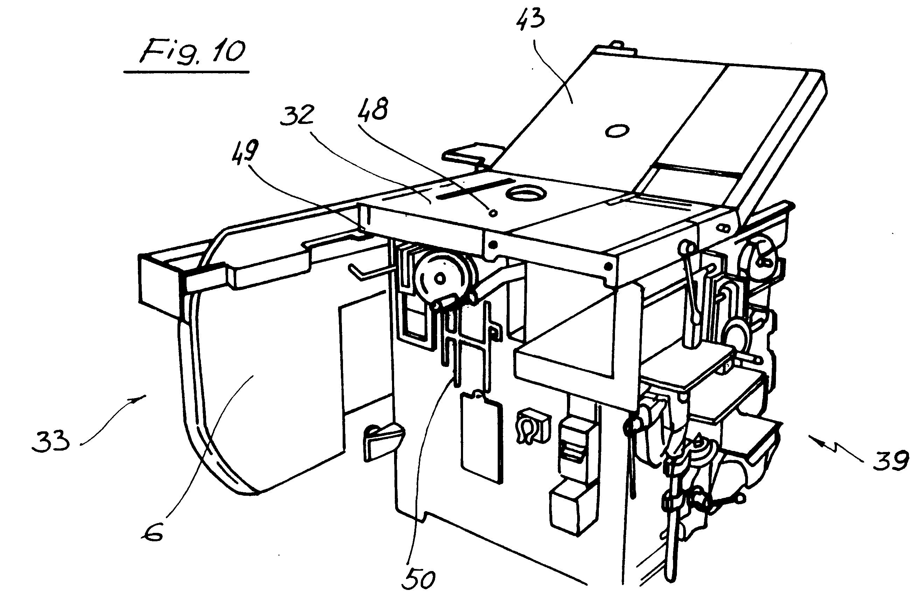

With reference to figure 7 and figure 8, for cutting wood, the machine has a band saw 6 to be folded onto work bench 32 from its resting position 33 on the side of the base 1, as shown in figure 10, and a disk saw 5, coming out of the half-bench 32 and adjustable in height by intervening on device 48, which can be inclined by means of controls 49 better illustrated in figure 10. This equipment allows both normal and inclined cuts to be carried out thanks to the possibility of inclining said disk, square or variously angled cuts thanks to squaring carriage 15 equipped with column 37 and workpiece locking arm 38, parallel cuts thanks to parallel guide 34 with rod 35 marked in millimetres and block 36 of micrometric adjustment and angulation.

Still with reference to figures 7 and 8, for the single-cylinder planing of wood the machine has a single-cylinder planer 9 with the aid of said parallel guide 34. For milling and tenoning, the machine utilizes the shaper 7 aided by guide 45 equipped with pressers and by carriage 15. The band saw 6 has specific guides not shown in the drawing.

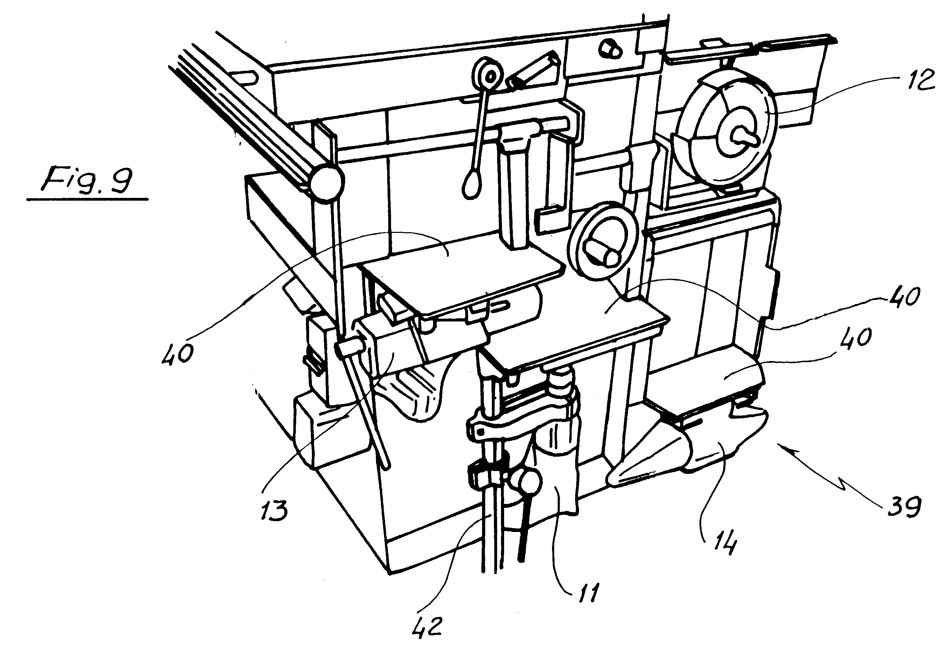

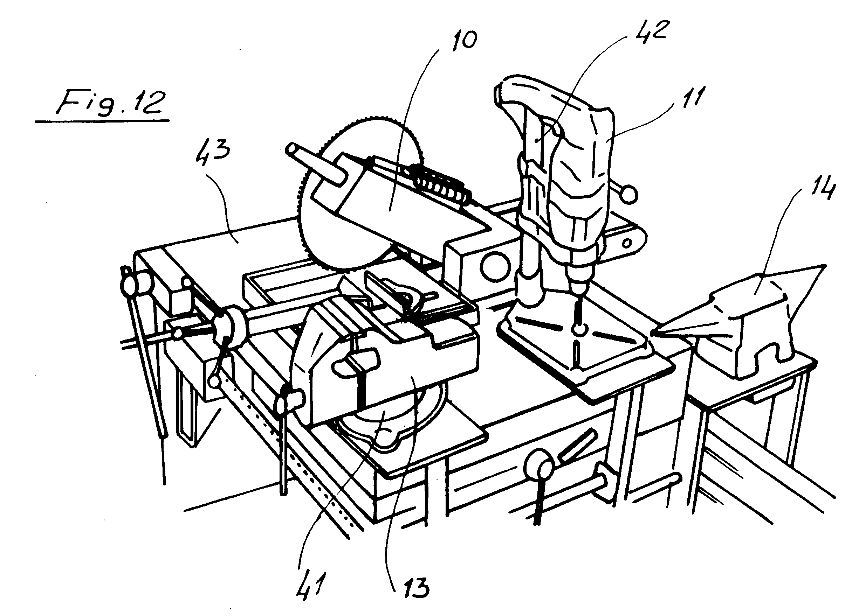

As shown in figures 9, 10, and 11, the assembly 39 of the equipment for working metals is prevalently arranged on various lateral supports 40, which can be folded on the work bench. In pratice, as shown in figure 12, the machine is equipped with bench vice 13 on rotatable plate 41, a drill 11 with pillar support 42, an anvil 14, a disk cropper 10 having a vice and accessories fixed to work bench 43, a bench vice 12 shown in figure 11.

The operation of the various tools and equipment for working and finishing is obtained by means of three electric motors positioned on the inside of the base, said motors, either directly or by means of suitable belt transmissions, drive respectively: the shaper and the cutter for iron (the first motor); the band saw (the second motor); a group of equipment that is the lathe, the polishing band, the disk saw, the bench grinder, the slotting machine, and the single and double cylinder planers (the third).

Obviously the selection of motors is strictly connected to the type of work to be carried out and is activated by means of suitable selectors-switches for the choice of equipment.

Some tools, furthermore, require different speeds of rotation and these are automatically selected by suitable devices for changing speed, or acting directly on relationships between driving pulleys and driven pulleys also using a rapid device which allows the displacement of the belt in the various grooves of the pulleys, acting on a presser which, by lowering the intermediate horizontal shaft disengages or engages the said belt.

For manual selection of tools comprising the series driven by a single motor, a system of rapid tooth couplings are utilized, which are not visible in the drawings and are of known type, constituted by two parts, the first comprising a sleeve splined to the shaft with a key which makes it integral to the shaft but free to move longitudinally, the second part is constituted by a toothed element which is free to rotate on the shaft but not to move along it; to the latter a pulley is coupled which transfers its movement to the pulley of the driven shaft of the tool. The displacement of the sleeve is obtained by means of a rod the end of which runs in a circular groove of the said sleeve. This allows the connection to be interrupted even during running, while the coupling operation must take place when the elements are still. The rod in turn is driven by a three-spoked wheel, which move following a set track 50, which is visible in figure 10, made in the side of the machine. One of these spokes, the central one, serves to operate the lateral displacements and in fact, running along the horizontal lengths of the slit, it brings the rod in line with the previously chosen sleeve. The other two spokes, come out from the sump only rotating the central spoke towards the top or towards the bottom in the appropriate vertical slits and control the engaging of the sleeve contemporeanously operating the disengagement of the stop lever and allowing the displacement of said sleeve for coupling which takes place by running along the appropriate horizontal length in the sump. The disengagement of the coupling and the engagement of the stop lever are carried out by the reverse manoevre.

In the machine described, the conversion from the arrangement for working wood to that for working iron, and thus, the motorisation of the relevant tools, is activated by rotating the half-bench 43 by 180 degrees on its fixed part 32, coupling the tang of the cutter in the shaft of the shaper and rotating the equipment lying in the side from the resting position to position and lock them on the half work bench 43.

As is clear from the detailed description hereinbefore, the combined machine described may be classified as an indispensable piece of equipment for craftwork by amateurs and artisans, providing, in a single operative unit, all the tools necessary to allow multiple processes to be carried out on wood and metal.

Finally it must be pointed out that the above disclosed embodiment is not limiting on the scope of the invention.

## Claims

1. Combined multifunctional machine tool (4) for working on pieces of wood and metal, comprising a metal frame (1) and a main work bench (32) divided into two foldable half-benches (43) to contain, support and make operative a plurality of tools, together with their operating parts and their components for service, adjustment, stopping, transmission and resetting, a first part of said plurality of tools allowing craftwork of wood and including an inclinable disk saw (5), a single-cylinder and a double-cylinder planer (9), a milling and tenoning shaper (7), a slotting machine, a squaring carriage (15), a band saw (6) for large thickness, a wood lathe (24), a polishing belt (8) and a head vice (47) with slots and dogs; a second part of said plurality of tools allowing for the working of metal pieces and including a cooled slow cutting saw (10), a pillar drill (11), a bench grinder (12), a bench vice (13) and an anvil (14) for working metals, said machine tool further comprising an auxiliary bench (31) under the main work bench (32), upon said auxiliary bench (31) being mounted said bench grinder (12) for iron, said slotting machines and said wood lathe (24).

2. Machine tool (4) according to claim 1, in which said wood lathe (24), fixed on the internal horizontal or auxiliary bench (31), comprises a lateral support (25) with pulleys (26), belts and bearings (27), a support (28) for the manual turning tool and a tailstock (29), characterized in that said tailstock (29) is arranged on the head of said bench grinder (12), itself also fixed to the extractable sliding saddle (51) along proper tracks (60), rotatable 180° with respect to said internal horizontal bench (31) and lockable with regard to said internal horizontal bench.

3. Machine tool (4) according to claim 1 or 2, characterized in that the slow cutting cropper (10) takes the motor drive from the underlying shaper (7), after folding of the half work bench (43) to which it is fixed.

## Patentansprüche

1. Kombinierte Werkzeugmaschine (4) für mehrere Bearbeitungsarten von Holz und Metallteilen, die einen Metallrahmen (1) und eine Hauptwerkbank (32) aufweist, die in zwei faltbare Halbwerkbänke (43) geteilt ist, um eine Vielzahl von Werkzeugen zu beinhalten, zu tragen und bedienbar zu machen, zusammen mit ihren Bedienteilen und ihren Funktions-, Einstell-, Abstell-, Übertragungs- und Rückstellkomponenten, wobei ein erster Teil dieser Vielzahl von Werkzeugen eine Bearbeitung von Holz gestattet und eine kippbare Kreissage (5), eine Einzylinder- und eine Doppelzylinder-Planbank (9), eine Fräs- und Zapfenschneidemaschine (7), eine Stoßmaschine, einen Kantungsschlitten (15), eine Bandsäge (6) für große Dicken, eine Holz-Drehbank (24), ein Schleifband (8) und einen stirnseitigen Schraubstock (47) mit Nuten und Klauen enthält; wobei ein zweiter Teil dieser Vielzahl von Werkzeugen das Bearbeiten von Metallteilen gestattet, und eine gekühlte, langsam schneidende Säge (10), eine Ständerbohrmaschine (11), eine Tischschleifmaschine (12), einen Tischschraubstock (13) und einen Amboß (14) zur Metallbearbeitung enthält, wobei die Werkzeugmaschine weiterhin einen Zusatztisch (31) unter der Hauptwerkbank (32) aufweist, wobei auf diesem Zusatztisch (31) die Tischschleifmaschine (12) für Stahl, die Stoßmaschine und die Holz-Drehbank (24) befestigt ist.

2. Werkzeugmaschine (4) nach Anspruch 1, bei der die Holz-Drehbank (24), die an dem innen befindlichen horizontalen oder Zusatztisch (31) befestigt ist, ein seitliches Widerlager (25) mit Scheiben (26), Riemen und Lagern (27), ein Widerlager (28) für das manuelle Drehwerkzeug und einen Reitstock (29) aufweist,
**dadurch gekennzeichnet,**
**daß** der Reitstock (29) am Kopf der Tischschleifmaschine (12) angeordnet ist, wobei dieser selbst auch an dem ausziehbaren Gleit-Unterschlitten (51) entlang geeigneter Schienen (60) befestigt ist, drehbar um 180 ° hinsichtlich des inneren horizontalen Tisches (31) und feststellbar hinsichtlich des inneren horizontalen Tisches.

3. Werkzeugmaschine (4) nach einem der Ansprüche 1 oder 2,
**dadurch gekennzeichnet,**
**daß** die langsam schneidende Schneideeinrichtung (10) den motorischen Antrieb von der darunterliegenden Fräsmaschine (7) erhält, nach Falten der halben Werkbank (43), an der sie befestigt ist.

## Revendications

1. Machine-outil multifonctionnelle combinée (4) pour le travail de pièces en bois et en métal, comprenant un bâti métallique (1) et un banc de travail principal (32), divisé en deux demi-bancs (43) rabattables, pour contenir, supporter et rendre opérationnels une pluralité d'outils, ensemble avec leurs pièces fonctionnelles et leurs éléments de service, de réglage, d'arrêt, de transmission et de remise à zéro, une première partie de ladite pluralité d'outils permettant le travail artisanal du bois et comportant une scie circulaire (5) inclinable, un rabot monocylindre et un rabot à cylindre double (9), et rabot de fraisage et de réalisation de tenons (7), une mortaiseuse, un chariot d'équarrissage (15), une scie à ruban (6) pour grande épaisseur, un tour à bois (24), une courroie polissoire (8) et un étau principal (47) à mortaises et butées, une seconde partie de ladite pluralité d'outils permettant le travail de pièces métalliques et comportant une scie de coupe lente refroidie (10), une perceuse sur pied (11), une meule à table (12), un étau à table (13) et une enclume (14) pour le travail de métaux, ladite machine-outil comprenant, en outre, un banc auxiliaire (31) sous le banc de travail principal (32), sur ce banc auxiliaire (31) étant montés ladite meule (12) à fer, ladite mortaiseuse et ledit tour à bois (24).

2. Machine-outil (4) selon la revendication 1, dans laquelle ledit tour à bois (24), fixé sur le banc horizontal ou auxiliaire intérieur (31), comprend un support latéral (25) à poulies (26), courroies et roulements (27), un support (28) pour l'outil de tournage manuel et une poupée (29), caractérisée en ce que ladite poupée (29) est disposée sur la tête de ladite meule à table (12) fixée, à son tour, sur le chariot coulissant extractible (51) le long de voies appropriées (60), pouvant tourner de 180° par rapport audit banc horizontal intérieur (31) et verrouillable par rapport audit banc horizontal intérieur.

3. Machine-outil (4) selon la revendication 1 ou 2, caractérisée en ce que la cisailleuse de coupe lente (10) prélève l'entraînement par moteur du rabot (7) situé au-dessous, après rabattement du demi-banc de travail (43) sur lequel elle est fixée.
